# EUROPEAN PATENT SPECIFICATION

(11) **EP 2 901 116 B1**
(45) Date of publication and mention of the grant of the patent: **15.08.2018**
(21) Application number: 13786145.6
(22) Date of filing: 30.09.2013
(51) Int. Cl.: G01K 5/32

(54) **TEMPERATURE SENSOR USING ALUMINUM CAPILLARY**
TEMPERATURSENSOR MIT ALUMINIUMKAPILLAREN
CAPTEUR DE TEMPÉRATURE UTILISANT UN CAPILLAIRE EN ALUMINIUM

(30) Priority: 28.09.2012 US 201213630321
(43) Date of publication of application: 05.08.2015
(73) Proprietor: Invensys Appliance Controls South America, 04548-005 São paulo - SP (BR)
(72) Inventor: BOSCHETTI, Vilnei Carlos, 95041-050 Caxias do Sul - RS (BR); PAZ, Leonardo Harter da, Barueri, São Paulo - 06465-130 (BR); MARTINS, André, 95000-000 Caxias do Sul - RS (BR)
(74) Representative: Cohausz & Florack
(86) International application number: PCT/BR2013/000382
(87) International publication number: WO 2014/047710

(56) References cited:
- WO-A1-83/02157
- WO-A1-99/46569
- A. E. GICKLER, F. H. LEPREVOST, T. PAN, A. M. JAOQUIN, C. A. BLUE, M. L. SANTELLA: "Aluminum Soldering - A new Look", 2nd International brazing & soldering conference , 2003, XP002722583, Retrieved from the Internet: URL:http://www.johnsonmfg.com/ [retrieved on 2014-03-31] & A. E. GICKLER, F. H. LEPREVOST, T. PAN, A. M. JAOQUIN, C. A. BLUE, M. L. SANTELLA: "Aluminum Soldering - A new Look", PROCEEDINGS OF 2ND INTERNATIONAL BRAZING & SOLDERING CONFERENCE, 2003,
- J. C. FOLEY, A. GICKLER, F. H. LEPREVOST, D. BROWN: "Analysis of ring and plug shear strengths for comparison of lead-free solders", JOURNAL OF ELECTRONIC MATERIALS, vol. 29, no. 10, 2000, pages 1258-1263, XP002722599, DOI: 10.1007/s11664-000-0021-8

## Description

### FIELD OF THE INVENTION

This invention generally relates to temperature sensors for refrigerators such as thermostats and dampers for refrigerators.

### BACKGROUND OF THE INVENTION

Temperature sensors of refrigeration thermostats and damper controls are currently manufactured using a copper capillary. Copper is a high-priced commodity with a price that is constantly increasing in the market. Further, the copper capillary receives a tin bath in order to avoid oxidation and contamination of food inside refrigerators. Further, this avoids galvanic corrosion when in contact with aluminum, such as of the evaporator, due to the difference in electrical potential between these two materials, when in the presence of moisture. An aluminum capillary is known from the international patent application WO 83/02157 A1, which is sealed by using a synthetic resin bonding material. The international patent application WO 99/46569 on the contrary seals the capillary by covering the solder joint with a hardened resin.

The present invention relates to improvements over the current state of the art as it relates to temperature sensors for refrigerators

### BRIEF SUMMARY OF THE INVENTION

Embodiments of the present invention relate to a new and improved temperature sensor assembly for use in temperature controlled environments and particularly in appliances such as refrigerators and freezers. The new and improved temperature sensor assembly reduces cost by using an aluminum capillary that is lower cost. Additionally, the new and improved temperature sensor assembly avoids oxidation contamination. Methods of forming the temperature sensor assembly as well as thermostats incorporating the temperature sensor assembly are provided.

According to the invention, the temperature sensor assembly includes an aluminum capillary soldered to an actuation unit to fluidly couple the capillary to the actuation unit and to form an internal cavity adapted to store a working fluid. The working fluid manipulates the actuation unit when the working fluid changes temperature.

According to the invention, the actuation unit is a bellows and the solder sealingly couples an open end of the capillary to an open end of the bellows such that the working fluid can actuate the bellows.

According to the invention, the temperature sensor assembly includes a sensor body in which the bellows is positioned. The solder seals an open end of the capillary to an internal surface of the sensor body and also seals an open end of the bellows to the internal surface of the sensor body to sealingly couple the bellows to the capillary.

In one embodiment, the bellows is made from a phosphorous bronze; and the sensor body is made from a tin plated steel or aluminum.

In one embodiment, the solder is a Zn/Al solder. More preferably, the Zn/Al solder has about 85 to 99% of Zn, and about 1 to 15% of Al. Even more preferably, the Zn/Al solder includes about 98 +/-.5% of Zn and about 2.0 +/- .5% of Al.

In one embodiment, the solder is a Sn/Zn solder. More preferably, the Sn/Zn solder has about 85 to 99% of Sn, and about 1 to 15% of Zn. Even more preferably, the Sn/Zn solder has about 98 +/- .5% of Sn and about 2.0 +/- .5% of Zn.

In one embodiment, the solder is a Sn/Cu/Ag solder. More preferably, the Sn/Cu/Ag solder has about 99% ± 0.1% of Sn, about 0.8 ± 0.1% of Cu and 0.2 ± 0.1% of Ag.

In one embodiment, a thermostat according to claim 14 is provided.

In another embodiment, a method of forming a temperature sensor assembly according to claim 15 is provided.

In a more particular method, the step of soldering is performed by either brazing or induction heating.

In one embodiment, the actuation unit is a bellows formed from a phosphorous bronze and the solder is a Zn/Al solder having about 85 to 99% of Zn, and about 1 to 15% of Al; a Sn/Zn solder having about 85 to 99% of Sn, and about 1 to 15% of Zn; or a Sn/Cu/Ag solder having about 99% ± 0.1% of Sn, about 0.8 ± 0.1% of Cu and 0.2 ± 0.1% of Ag.

In a further embodiment, the bellows is made from a phosphorous bronze. The step of soldering includes soldering an open end of the capillary to a sensor body defining an internal cavity in which the bellows is positioned. The sensor body is made a tin plated steel or aluminum. The step of soldering also includes soldering an open end of the bellows to the sensor body and soldering the capillary to the sensor body to sealingly couple the capillary to the bellows and form the internal cavity in which the working fluid is stored.

Other aspects, objectives and advantages of the invention will become more apparent from the following detailed description when taken in conjunction with the accompanying drawings.

### BRIEF DESCRIPTION OF THE DRAWINGS

The accompanying drawings incorporated in and forming a part of the specification illustrate several aspects of the present invention and, together with the description, serve to explain the principles of the invention. In the drawings:
FIG. 1 is a perspective illustration of a thermostat according to an embodiment of the present invention;
FIG. 2 is a side illustration of a temperature sensor sub-assembly of the thermostat of FIG. 1; and
FIG. 3 is a cross-sectional illustration of the temperature sensor sub-assembly of FIG. 3.

While the invention will be described in connection with certain preferred embodiments, there is no intent to limit it to those embodiments. On the contrary, the intent is to cover all alternatives, modifications and equivalents as included within the spirit and scope of the invention as defined by the appended claims.

### DETAILED DESCRIPTION OF THE INVENTION

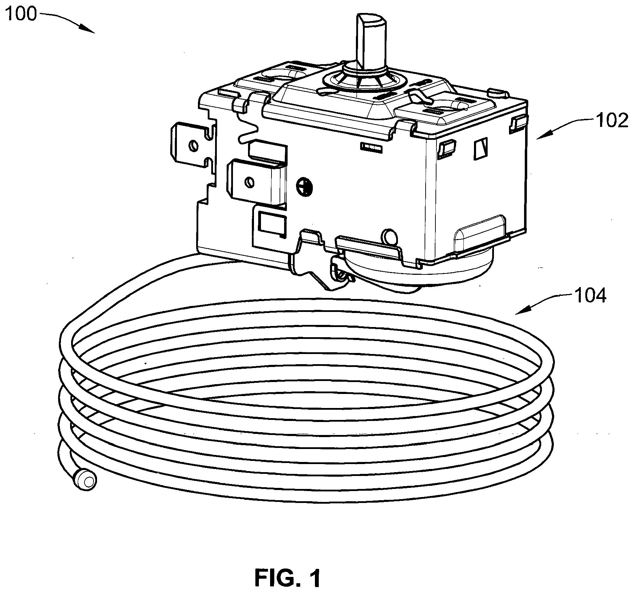

FIG. 1 illustrates a thermostat 100 for use in a refrigerator according to an embodiment of the present invention. While it is intended for the thermostat 100 to be used in a refrigerator, the thermostat 100 can be used in other similar environments and is not limited solely to a refrigerator unless expressly limited.

The thermostat 100 generally includes a switch assembly 102 and a temperature sensor assembly 104. The switch assembly 102 includes the control structure of the thermostat 100 which can be used to turn on or off a compressor of the refrigerator.

The temperature sensor assembly 104 is exposed, at least in part, to the sensed environment where the temperature is being controlled. Changes in the sensed environment are sensed by the temperature sensor assembly 104 and relayed back to the switch assembly 102.

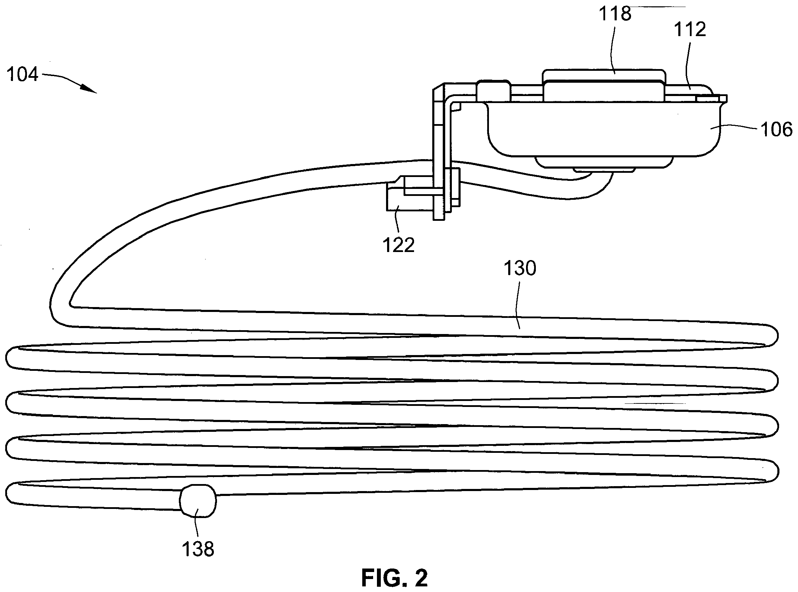

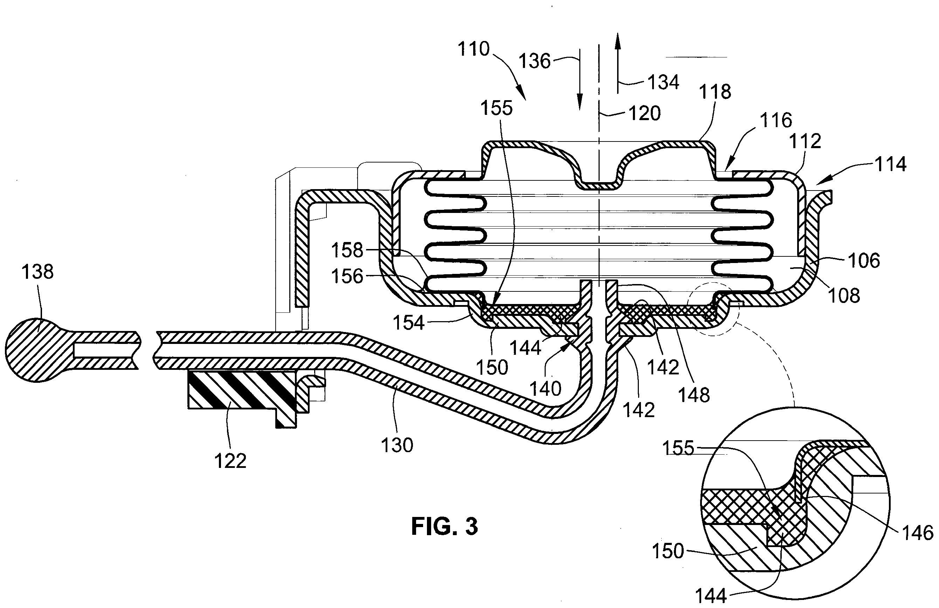

With reference to FIGS. 2 and 3, and with primary reference to the cross-sectional illustration of FIG. 3, the temperature sensor assembly 104 includes a sensor body 106 that defines an internal cavity 108. The sensor body 106 is preferably formed from tin plated steel or aluminum.

A bellows 110 is positioned within the sensor body 106. The bellows 110 is formed from a phosphorous bronze. A bellows keeper 112 is fitted into an open end 114 of the sensor body 106. The bellows 110 includes an actuation portion 118, in the illustrated embodiment, that extends through an aperture 116 formed through bellows keeper 112. The actuation portion 118 of the bellows 110 operably cooperates with and actuates switching structure within the switch assembly 102. The bellows keeper 112 limits the axial expansion of the bellows 110 along axis 120 and may be formed from steel.

An optional dust protector 122 is attached to the sensor body 106 and is preferably formed from a plastic material. The dust protector 122 prevents dust from passing into the temperature controlled environment.

A capillary 130 fluidly communicates with an interior of the bellows 110. The bellows and capillary 130 generally define an internal cavity that is filled with a gas or other fluid that expands and contracts depending on changes in temperature. The capillary will be positioned within the temperature controlled environment so that changes in temperature of the environment cause changes in the pressure of the fluid within the capillary 130. As the fluid rises in temperature the fluid expands raising the pressure within the bellows 110 causing the bellows 110 to expand, and particularly, causing the actuation portion 118 to move along axis 120 in a first direction, illustrated by arrow 134. When the temperature of the fluid drops, the pressure within the bellows 110 drops causing the bellows 110 to contract such that the actuation portion 118 of the bellows move along axis 120 in an opposite second direction, illustrated by arrow 136. This movement of the actuation portion 118 actuates the switching structure within the switch assembly 102 to either turn on or off a unit for controlling the temperature of the temperature controlled environment.

In the illustrated embodiment, the capillary 130 is hollow tubing formed from aluminum. One end of the tubing is closed with a first portion of solder 138. The opposite end of the tubing extends through an aperture 140 in the sensor body 106 and is in fluid communication with the interior of the bellows 110. The end of the tubing may include retaining flanges 142 that secure the tubing in the aperture 140.

A second portion of solder 144 seals the open end 146 of the bellows 110 to the open second end 148 of the capillary 130. In the instant embodiment, the second portion of solder 144 also seals the open end 146 of the bellows 110 to a stepped bottom wall 150 of the sensor body 106. The second portion of solder 144 also seals the open end 148 of the capillary 130 to the stepped bottom wall 150. Preferably, the outer diameter of the open end 146 of the bellows 110 is smaller than the inner diameter of an axially extending portion of a stepped region 154 of the stepped bottom 150 such that a radial gap is formed therebetween. This allows the second portion of solder 144 to fully surround the open end of the bellows 146 and to extend into the gap formed between the stepped region 154 and the open end 146 of the bellows. The stepped bottom 150 may include an annular recess 155 in which the second portion of solder 144 sits to further improve engagement and sealing between the solder 144 and the sensor body 106.

In a preferred embodiment, a third portion of solder 156 is provided between one of the folds 158 of the bellows 110 and the stepped bottom 150 of the sensor body 106. This improves the seal between the bellows and assists in preventing the forces acting on the bellows 110 due to the expansion and contraction of the bellows 110 due to changes in temperature of the fluid from applying stresses to the open end 146 of the bellows 110.

By providing an aluminum capillary 130, the cost of the capillary 130 is significantly reduced. Further, the capillary 130 will not oxidize such that secondary processing of the capillary 130 is not necessary, e.g. tin plating, further reducing cost.

In one embodiment, in order to allow the soldering process between aluminum capillary 100 and sensor body 106, a Zn/Al solder is used. The solder composition may be from 85 to 99% of Zn and from 1% to 15% of Al. The preferred composition is 98.0 +/.5% of Zn and 2.0 +/- .5% of Al. To solder the bellows 100 and sensor body 106 a Zn/Al solder may be used. The solder composition may be from 85 to 99% of Zn, and 1 to 15% of Al. The preferred composition is 98.0 +/-.5% of Zn and 2.0 +/- .5% of Al. To close the tip of the capillary 130, a Zn/Al solder may be used. The solder composition may be from 85 to 99% of Zn, and 1 to 15% of Al. The preferred composition is 98.0 +/- .5% of Zn and 2.0 +/- .5% of Al.

In another embodiment, a Sn/Zn solder is used. To solder the aluminum capillary 130 to the sensor body 106 the Sn/Zn solder may have from 85 to 99% of Sn and from 1% to 15% of Zn. The preferred composition is 98.0 +/-.5% of Sn and 2.0 +/-.5% of Zn. To solder the bellows 110 to the sensor body 106 the Sn/Zn solder may have the following composition: 85 to 99% of Zn, and from 1 to 15% of Zn. The preferred composition is 98.0 +/- .5% of Sn and 2.0 +/- .5% of Zn. To close the tip of the capillary 130, the Sn/Zn solder may have the following composition: from 85 to 99% of Sn, and 1 to 15% of Zn. The preferred composition is 98.0 +/-.5% of Sn and 2.0 +/-.5% of Zn.

In another embodiment, a Sn/Cu/Ag solder is used. To solder the aluminum capillary 130 to the sensor body 106 the Sn/Cu/Ag solder may have the following composition 99.0 +/-.1% of Sn, .8±.1% of Cu and .2± .1% of Ag. To solder the bellows 110 to the sensor body 106 the Sn/Cu/Ag solder may have the following composition: 99.0±.1% of Sn, .8±.1% of Cu and .2±0.1% of Ag. To close the tip of the capillary 130, the Sn/Cu/Ag solder may have the following composition: 99.0%±.1% of Sn, .8±.1% of Cu and .2±.1% of Ag.

For all three soldering options above mentioned it is possible to use brazing or induction systems.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein.

## Claims

1. A temperature sensor (104) assembly for use in temperature controlled environments comprising:
an aluminum capillary (130);
an actuation unit (110) operably fluidly coupled to the capillary (130), the aluminum capillary (130) is soldered to said actuation unit (110) to fluidly couple the capillary (130) to the actuation unit (110) and to form an internal cavity (108) adapted to store a working fluid, the working fluid is configured to manipulate the actuation unit (110) when the working fluid changes temperature; and solder (138, 144) sealingly coupling the capillary to the actuation unit, wherein the actuation unit is a bellows (110); and
the solder (138, 144) sealingly couples the capillary to the bellows such that the working fluid can actuate the bellows, wherein the temperature sensor (104) assembly further comprises a sensor body (106),
**characterized in that**,
the solder (138,144) seals an open end of the capillary (130) to an internal surface of the sensor body (106) and also seals an open end of the bellows (110) to the internal surface of the sensor body (106) to sealingly couple the bellows (110) to the capillary (130).

2. The temperature sensor assembly of claim 1, wherein the bellows (110) is made from a phosphorous bronze; and wherein the sensor body (106) is made from a material selected from the group consisting of: a tin plated steel and aluminum.

3. The temperature sensor of assembly claim 1, wherein the solder (138,144) is a Zn/Al solder.

4. The temperature sensor of assembly claim 3, wherein the Zn/Al solder (138,144) has about 85 to 99% of Zn, and about 1 to 15% of Al.

5. The temperature sensor assembly of claim 4, wherein the Zn/Al solder (138,144) includes about 98 +/-.5% of Zn and about 2.0 +/- .5% of Al.

6. The temperature sensor assembly of claim 4, wherein the sensor body (106) defines an internal cavity (108) in which the bellows (110) is positioned, the sensor body (106) being made from a material selected from the group consisting of: a tin plated steel and aluminum;
wherein the bellows (110) is made from a phosphorous bronze.

7. The temperature sensor assembly of claim 1, wherein the solder (138,144) is a Sn/Zn solder.

8. The temperature sensor assembly of claim 7, wherein the Sn/Zn solder (138,144) has about 85 to 99% of Sn, and about 1 to 15% of Zn.

9. The temperature sensor assembly of claim 8, wherein the Sn/Zn solder (138,144) has about 98 +/- .5% of Sn and about 2.0 +/- .5% of Zn.

10. The temperature sensor assembly of claim 9, wherein the sensor body (106) defines an internal cavity (108) in which the bellows (110) is positioned, the sensor body (106) being made from a material selected from the group consisting of: a tin plated steel and aluminum;
wherein the bellows (110) is made from a phosphorous bronze.

11. The temperature sensor assembly of claim 1, wherein the solder (138,144) is a Sn/Cu/Ag solder.

12. The temperature sensor assembly of claim 11, wherein the Sn/Cu/Ag solder (138,144) has about 99% ± 0.1% of Sn, about 0.8 ± 0.1% of Cu and 0.2 ± 0.1% of Ag.

13. The temperature sensor assembly of claim 12, wherein the sensor body defines an internal cavity in which the bellows is positioned, the sensor body being made from a material selected from the group consisting of: a tin plated steel and aluminum;
wherein the bellows is made from a phosphorous bronze.

14. A thermostat (100) comprising:
a switch assembly (102);
a temperature sensor assembly (104) according to claim 1,
wherein the actuation unit (110) operably controls the switching unit in response to changes in temperature of the aluminum capillary (130).

15. A method of forming a temperature sensor assembly according to claim 1 comprising:
soldering the aluminum capillary (130) to the actuation unit (110) to operably fluidly coupled the capillary (130) to the actuation unit (110) such that the capillary (130) and actuation unit (110) define the internal cavity (108) storing the working fluid, the working fluid configured to manipulate the actuation unit when the working fluid changes temperature.

16. The method of claim 15, wherein the step of soldering is performed by either brazing or induction heating.

17. The method of claim 15, wherein the actuation unit is a bellows (110) formed from a phosphorous bronze and the solder (138,144) is selected from the group consisting of:
a Zn/Al solder having about 85 to 99% of Zn, and about 1 to 15% of Al;
a Sn/Zn solder having about 85 to 99% of Sn, and about 1 to 15% of Zn; and
a Sn/Cu/Ag solder having about 99% ± 0.1% of Sn, about 0.8 ± 0.1% of Cu and 0.2 ± 0.1% of Ag.

18. The method of claim 17, wherein:
the bellows (110) is made from a phosphorous bronze;
the step of soldering includes soldering an open end of the capillary (130) to a sensor body (106) defining an internal cavity (108) in which the bellows (110) is positioned, the sensor body (106) being made from a material selected from the group consisting of: a tin plated steel and aluminum; and
the step of soldering also includes soldering an open end of the bellows (110) to the sensor body (106) to sealingly couple the capillary (130) to the bellows (110) and form the internal cavity (108) in which the working fluid is stored.

## Patentansprüche

1. Anordnung eines Temperatursensors (104) zur Verwendung in temperaturgesteuerten Umgebungen, umfassend:
eine Aluminium-Kapillare (130);
eine Betätigungseinheit (110), die betriebsfähig in Fluidverbindung mit der Kapillare (130) steht, wobei die Aluminium-Kapillare (130) mit der Betätigungseinheit (110) verlötet ist, um die Kapillare (130) fluidmäßig mit der Betätigungseinheit (110) zu verbinden und einen inneren Hohlraum (108) zu bilden, der angepasst ist, ein Arbeitsfluid zu speichern, wobei das Arbeitsfluid ausgestaltet ist, die Betätigungseinheit (110) zu betätigen, wenn das Arbeitsmittel seine Temperatur verändert; und
Lot (138, 144), das die Kapillare dichtend mit der Betätigungseinheit verbindet, wobei die Betätigungseinheit ein Balg (110) ist; und
das Lot (138, 144) die Kapillare dichtend mit dem Balg verbindet, sodass das Arbeitsfluid den Balg betätigen kann, wobei die Anordnung des Temperatursensors (104) ferner einen Sensorkörper (106) umfasst,
**dadurch gekennzeichnet, dass**
das Lot (138,144) ein offenes Ende der Kapillare (130) gegen eine Innenfläche des Sensorkörpers (106) abdichtet und zudem ein offenes Ende des Balges (110) gegen die Innenfläche des Sensorkörpers (106) abdichtet, um den Balg (110) dichtend mit der Kapillare (130) zu verbinden.

2. Anordnung eines Temperatursensors nach Anspruch 1, wobei der Balg (110) aus Phosphorbronze hergestellt ist; und
wobei der Sensorkörper (106) aus einem Material hergestellt ist, das aus der Gruppe ausgewählt ist, die aus verzinntem Stahl und Aluminium besteht.

3. Anordnung eines Temperatursensors nach Anspruch 1, wobei das Lot (138, 144) ein Zn/Al-Lot ist.

4. Anordnung eines Temperatursensors nach Anspruch 3, wobei das Zn/Al-Lot (138, 144) etwa 85 bis 99 % Zn, und etwa 1 bis 15 % Al enthält.

5. Anordnung eines Temperatursensors nach Anspruch 4, wobei das Zn/Al-Lot (138, 144) etwa 98 +/- 0,5 % Zn und etwa 2,0 +/- 0,5 % Al enthält.

6. Anordnung eines Temperatursensors nach Anspruch 4, wobei der Sensorkörper (106) einen inneren Hohlraum (108) definiert, in dem der Balg (110) angeordnet ist, wobei der Sensorkörper (106) aus einem Material hergestellt ist, das aus der Gruppe ausgewählt ist, die aus einem verzinnten Stahl und Aluminium besteht;
wobei der Balg (110) aus Phosphorbronze hergestellt ist.

7. Anordnung eines Temperatursensors nach Anspruch 1, wobei das Lot (138, 144) ein Sn/Zn-Lot ist.

8. Anordnung eines Temperatursensors nach Anspruch 7, wobei das Sn/Zn-Lot (138, 144) etwa 85 bis 99 % Sn, und etwa 1 bis 15 % Zn aufweist.

9. Anordnung eines Temperatursensors nach Anspruch 8, wobei das Sn/Zn-Lot (138,144) etwa 98 +/- 0,5 % Sn, und etwa 2,0 +/- 0,5 % Zn aufweist.

10. Anordnung eines Temperatursensors nach Anspruch 9, wobei der Sensorkörper (106) einen inneren Hohlraum (108) definiert, in dem der Balg (110) angeordnet ist, wobei der Sensorkörper (106) aus einem Material hergestellt ist, das aus der Gruppe ausgewählt ist, die aus einem verzinnten Stahl und Aluminium besteht;
wobei der Balg (110) aus Phosphorbronze hergestellt ist.

11. Anordnung eines Temperatursensors nach Anspruch 1, wobei das Lot (138, 144) ein Sn/Cu/Ag-Lot ist.

12. Anordnung eines Temperatursensors nach Anspruch 11, wobei das Sn/Cu/Ag-Lot (138,144) etwa 99 ± 0,1 % Sn, und etwa 0,8 ± 0,1 % Cu und 0,2 ± 0,1 % Ag aufweist.

13. Anordnung eines Temperatursensors nach Anspruch 12, wobei der Sensorkörper einen inneren Hohlraum definiert, in dem der Balg angeordnet ist, wobei der Sensorkörper aus einem Material hergestellt ist, das aus der Gruppe ausgewählt ist, die aus einem verzinnten Stahl und Aluminium besteht;
wobei der Balg aus Phosphorbronze hergestellt ist.

14. Thermostat (100), umfassend:
eine Schalteranordnung (102);
eine Anordnung eines Temperatursensors (104) nach Anspruch 1,
wobei die Betätigungseinheit (110) als Reaktion auf Temperaturveränderungen der Aluminium-Kapillare (130) die Schalteinheit betriebsfähig steuert.

15. Verfahren zum Bilden einer Anordnung eines Temperatursensors nach Anspruch 1, umfassend:
Löten der Aluminium-Kapillare (130) mit der Betätigungseinheit (110), um die Kapillare (130) betriebsfähig in Fluidverbindung mit der Betätigungseinheit (110) zu bringen, sodass die Kapillare (130) und Betätigungseinheit (110) einen inneren Hohlraum (108) definieren, der das Arbeitsfluid enthält, wobei das Arbeitsfluid ausgestaltet ist, die Betätigungseinheit zu betätigen, wenn das Arbeitsfluid seine Temperatur verändert.

16. Verfahren nach Anspruch 15, wobei der Schritt des Lötens entweder durch Hartlöten oder Induktionserwärmen ausgeführt wird.

17. Verfahren nach Anspruch 15, wobei die Betätigungseinheit ein Balg (110) ist, der aus Phosphorbronze gebildet ist und das Lot (138, 144) aus der Gruppe ausgewählt ist, die aus Folgendem besteht:
einem Zn/Al-Lot, das etwa 85 bis 99 % Zn, und etwa 1 bis 15 % Al aufweist;
einem Sn/Zn-Lot, das etwa 85 bis 99 % Sn, und etwa 1 bis 15 % Zn aufweist; und
einem Sn/Cu/Ag-Lot, das etwa 99 ± 0,1 % Sn, etwa 0,8 ± 0,1 % Cu und 0,2 ± 0,1 % Ag aufweist.

18. Verfahren nach Anspruch 17, wobei:
der Balg (110) aus einer Phosphorbronze hergestellt ist;
der Schritt des Lötens ein Löten eines offenen Endes der Kapillare (130) an einem Sensorkörper (106) umfasst, der einen inneren Hohlraum (108) definiert, in dem der Balg (110) angeordnet ist, wobei der Sensorkörper (106) aus einem Material hergestellt ist, das aus der Gruppe ausgewählt ist, die aus einem verzinnten Stahl und Aluminium besteht; und
der Schritt des Lötens auch umfasst, ein offenes Ende des Balges (110) mit dem Sensorkörper (106) zu verlöten, um die Kapillare (130) dichtend mit dem Balg (110) zu verbinden und den inneren Hohlraum (108) zu bilden, in dem das Arbeitsfluid gespeichert ist.

## Revendications

1. Ensemble de capteur de température (104) destiné à être utilisé dans des environnement à température régulée, comprenant :
un capillaire en aluminium (130) ;
une unité d'actionnement (110) accouplée fluidiquement et fonctionnellement au capillaire (130), le capillaire en aluminium (130) étant soudé à ladite unité d'actionnement (110) pour accoupler fluidiquement le capillaire (130) à l'unité d'actionnement (110) et pour former une cavité interne (108) adaptée pour stocker un fluide de travail, le fluide de travail étant configuré pour manipuler l'unité d'actionnement (110) lorsque le fluide de travail change de température ; et une soudure (138, 144) accouplant de façon étanche le capillaire à l'unité d'actionnement, l'unité d'actionnement étant un soufflet (110) ; et
la soudure (138, 144) accouple de façon étanche le capillaire au soufflet de manière à ce que le fluide de travail puisse actionner le soufflet, l'ensemble de capteur de température (104) comprenant en outre un corps de capteur (106),
**caractérisé en ce que**
la soudure (138, 144) scelle une extrémité ouverte du capillaire (130) à une surface intérieure du corps de capteur (106) et scelle également une extrémité ouverte du soufflet (110) à la surface intérieure du corps de capteur (106) pour accoupler de façon étanche le soufflet (110) au capillaire (130).

2. Ensemble de capteur de température selon la revendication 1, dans lequel le soufflet (110) est constitué d'un bronze phosphoré ; et
dans lequel le corps de capteur (106) est constitué d'un matériau sélectionné parmi le groupe comprenant : un acier étamé et l'aluminium.

3. Ensemble de capteur de température selon la revendication 1, dans lequel la soudure (138, 144) est une soudure Zn/Al.

4. Ensemble de capteur de température selon la revendication 3, dans lequel la soudure Zn/Al (138, 144) présente environ de 85 à 99% de Zn, et environ de 1 à 15% d'Al.

5. Ensemble de capteur de température selon la revendication 4, dans lequel la soudure Zn/Al (138, 144) comprend environ 98 +/- 0,5% de Zn et environ 2,0 +/- 0,5% d'Al.

6. Ensemble de capteur de température selon la revendication 4, dans lequel le corps de capteur (106) définit une cavité interne (108) dans laquelle est positionné le soufflet (110), le corps de capteur (106) étant constitué d'un matériau sélectionné parmi le groupe comprenant : un acier étamé et l'aluminium ;
dans lequel le soufflet (110) est constitué d'un bronze phosphoré.

7. Ensemble de capteur de température selon la revendication 1, dans lequel la soudure (138, 144) est une soudure Sn/Zn.

8. Ensemble de capteur de température selon la revendication 7, dans lequel la soudure Sn/Zn (138,144) présente environ de 85 à 99% de Sn, et environ de 1 à 15% de Zn.

9. Ensemble de capteur de température selon la revendication 8, dans lequel la soudure Sn/Zn (138, 144) présente environ 98 +/- 0,5% de Sn et environ 2,0 +/- 0,5% de Zn.

10. Ensemble de capteur de température selon la revendication 9, dans lequel le corps de capteur (106) définit une cavité interne (108) dans laquelle est positionné le soufflet (110), le corps de capteur (106) étant constitué d'un matériau sélectionné parmi le groupe comprenant : un acier étamé et l'aluminium ;
dans lequel le soufflet (110) est constitué d'un bronze phosphoré.

11. Ensemble de capteur de température selon la revendication 1, dans lequel la soudure (138, 144) est une soudure Sn/Cu/Ag.

12. Ensemble de capteur de température selon la revendication 11, dans lequel la soudure Sn/Cu/Ag (138,144) présente environ 99% ± 0,1% de Sn, environ 0,8 ± 0,1% de Cu et 0,2 ± 0,1% d'Ag.

13. Ensemble de capteur de température selon la revendication 12, dans lequel le corps de capteur définit une cavité interne dans laquelle est positionné le soufflet, le corps de capteur étant constitué d'un matériau sélectionné parmi le groupe comprenant : un acier étamé et l'aluminium ;
dans lequel le soufflet est constitué d'un bronze phosphoré.

14. Thermostat (100) comprenant :
un ensemble de commutateur (102) ;
un ensemble de capteur de température (104) selon la revendication 1,
dans lequel l'unité d'actionnement (110) commande fonctionnellement l'unité de commutation en réponse à des changements de température du capillaire en aluminium (130).

15. Procédé pour la formation d'un ensemble de capteur de température selon la revendication 1, comprenant :
le soudage du capillaire en aluminium (130) à l'unité d'actionnement (110) pour accoupler fluidiquement et fonctionnellement le capillaire (130) à l'unité d'actionnement (110) de manière à ce que le capillaire (130) et l'unité d'actionnement (110) définissent la cavité interne (108) stockant le fluide de travail, le fluide de travail étant configuré pour manipuler l'unité d'actionnement lorsque le fluide de travail change de température.

16. Procédé selon la revendication 15, dans lequel l'étape de soudage est réalisée par brasage ou par chauffage par induction.

17. Procédé selon la revendication 15, dans lequel l'unité d'actionnement est un soufflet (110) constitué d'un bronze phosphoré et la soudure (138, 144) est sélectionnée parmi le groupe comprenant :
une soudure Zn/Al présentant environ de 85 à 99% de Zn, et environ de 1 à 15% d'Al ;
une soudure Sn/Zn présentant environ de 85 à 99% de Sn, et environ de 1 à 15% de Zn ; et
une soudure Sn/Cu/Ag présentant environ 99% ± 0,1% de Sn, environ 0,8 ± 0,1% de Cu et 0,2 ± 0,1% d'Ag.

18. Procédé selon la revendication 17, dans lequel :
le soufflet (110) est constitué d'un bronze phosphoré ;
l'étape de soudage comprend le soudage d'une extrémité ouverte du capillaire (130) à un corps de capteur (106) définissant une cavité interne (108) dans laquelle est positionné le soufflet (110), le corps de capteur (106) étant constitué d'un matériau sélectionné parmi le groupe comprenant : un acier étamé et l'aluminium; et
l'étape de soudage comprend également le soudage d'une extrémité ouverte du soufflet (110) au corps de capteur (106) pour accoupler de façon étanche le capillaire (130) au soufflet (110) et pour former une cavité interne (108) dans laquelle est stocké le fluide de travail.
